# FASCICULE DE BREVET EUROPEEN

(11) **EP 0 660 559 B1**
(45) Date de publication et mention de la délivrance du brevet: **27.04.2005**
(21) Numéro de dépôt: 94203635.1
(22) Date de dépôt: 15.12.1994
(51) Int. Cl.: H04L 5/06, H04B 7/26

(54) **Système de communication à multiporteuses à saut de fréquence**
Mehrträger-Frequenzsprungkommunikationssystem
Multicarrier frequency-hopping communication system

(30) Priorité: 22.12.1993 FR 9315460
(43) Date de publication de la demande: 28.06.1995
(73) Titulaire: Koninklijke Philips Electronics N.V., 5621 BA Eindhoven (NL)
(72) Inventeur: Brajal, Américo, c/o Société Civile S.P.I.D., F-75008 Paris (FR); Chouly,Antoine, c/o Societé Civile S.P.I.D, F-75008 Paris (FR)
(74) Mandataire: Landousy, Christian

(56) Documents cités:
- EP-A- 0 596 699
- IEEE TRANSACTIONS ON VEHICULAR TECHNOLOGY, vol.42, no.3, Août 1993, NEW YORK US pages 302 - 313 WARNER & LEUNG 'OFDM/FM frame synchronization for mobile radio data communication'
- IEEE TRANSACTIONS ON COMMUNICATIONS, vol.33, no.7, Juillet 1985, NEW YORK US pages 665 - 675 CIMINI 'Analysis and simulation of a digital mobile channel using orthogonal frequency division multiplexing'

## Description

L'invention concerne un système de communication à étalement de spectre à multiporteuses par sauts de fréquence comprenant au moins une station émettrice et au moins une station réceptrice communiquant entre elles à travers au moins un canal de transmission, le système comprenant, à l'émission, des moyens de transfert, en bande de base, de données par codage par étalement de spectre à sauts de fréquence et, à la réception, des moyens de transfert inverse pour récupérer des données estimées.

Elle concerne également un système de communication comprenant une station de base émettrice/réceptrice et une pluralité de stations utilisatrices émettrices/réceptrices. Elle concerne également une station utilisatrice émettrice/réceptrice notamment soit une station mobile assurant des communications par voie hertzienne, soit une station fixe communiquant par câbles, satellites ou autres. Elle concerne également une station de base destinée à recevoir et à réémettre des messages en vue de mettre en communication des stations mobiles entre elles.

Un système de communication entre utilisateurs doit satisfaire à plusieurs critères et parmi ceux-ci celui de confidentialité est aisément ressenti. Les concepteurs de tels systèmes se sont donc orientés vers l'utilisation de codages pour la transmission des messages à transmettre. Un système de codage performant est le système à accès multiple à division de code appelé CDMA en langue anglaise (Code Division Multiple Access). Ce système présente les avantages de confidentialité, de robustesse au brouillage, de robustesse contre des interférences ou des dégradations, et est, par ailleurs, facilement dimensionnable à un nombre quelconque d'utilisateurs. Le principe du système CDMA consiste à faire un étalement du spectre fréquentiel. Pour cela, un message à coder, de durée élémentaire Ts, est transformé en un message de durée élémentaire Tc telle que Tc = Ts/1. Le paramètre 1 peut être inférieur, égal ou supérieur à 1. Avec M utilisateurs, à un instant donné, correspondent M messages de durée Tc. Ces messages sont alors codés par la technique connue dite à étalement de spectre par sauts de fréquence qui consiste à moduler M porteuses différentes par les M messages et à permuter, de temps à autre, l'affectation de chaque porteuse à respectivement chaque interlocuteur pour répartir les défauts de transmission du canal. Selon que 1 est supérieur ou inférieur à 1, on obtient la technique rapide à sauts de fréquence ou la technique lente à sauts de fréquence. Lorsque 1 est égal à 1, la durée du message à coder n'est pas changée.

Un tel système est par exemple décrit dans le livre de J.G. PROAKIS, "Digital Communications" chapitre 8, pages 845-860, publié par Mc GRAW-HILL Book Company (1989), New-York.

Une station de base reçoit les messages codés en provenance de tous les utilisateurs, les décode puis les recode et les réémet vers tous les utilisateurs. Elle gère les communications, c'est-à-dire qu'elle permet à un utilisateur destinataire, et à lui seul, de décoder un message qui lui est destiné. Un tel système nécessite d'utiliser à la réception un égaliseur qui peut devenir complexe lorsque le nombre d'utilisateurs croît. En effet, en présence d'échos d'un environnement à multitrajets, les échos se rapportant au canal d'un utilisateur ne seront généralement pas les mêmes que les échos du canal se rapportant à un autre utilisateur. Les performances réelles d'un tel système sont donc limitées. D'autre part, il est nécessaire de bien synchroniser le récepteur sur le début de chaque séquence de sauts pour que le message reçu puisse être décodé, ce qui constitue souvent une difficulté.

D'autre part, une telle technique nécessite d'utiliser un générateur de fréquences pour générer la porteuse affectée à chaque utilisateur. Ce générateur doit pouvoir changer rapidement de fréquence à chaque saut de fréquence. Pour éviter les recouvrements entre les fréquences de deux générateurs, il faut généralement prévoir une bande de garde, ce qui constitue un handicap.

Un but de l'invention est donc de supprimer ces inconvénients et d'accroître la fiabilité et la capacité des transmissions dans les communications entre utilisateurs.

Un but supplémentaire est de conserver au système une complexité réduite en complément des performances accrues.

Ces buts sont atteints avec un système de communication décrit dans le préambule dans lequel les moyens de transfert effectuent le codage selon une répartition de fréquences orthogonales et en ce que les moyens de transfert inverse effectuent un décodage réalisant une transformation inverse de celle du codage.

Pour effectuer le codage/décodage, les moyens de transfert comprennent des moyens d'application d'une transformée de Fourier inverse et les moyens de transfert inverse comprennent des moyens d'application d'une transformée de Fourier directe.

Ainsi avantageusement, il n'est plus nécessaire de disposer d'un générateur de fréquences individuel pour chaque station, générateur qui selon la technique antérieure devait pouvoir changer rapidement de fréquence à chaque saut de fréquence. Il n'est donc plus nécessaire de tenir compte des temps de transition de chaque générateur ni de leur synchronisation. Il n'y a plus également de phénomènes de recouvrement de spectres entre deux générateurs.

Pour effectuer un mélange qui change au cours du temps, il faut disposer d'un générateur de séquences de mélange piloté de telle sorte que deux utilisateurs ne soient pas affectés à la même fréquence au même instant.

Pour obtenir cela, pour coder, respectivement pour décoder les sauts de fréquence, les moyens de transfert, respectivement les moyens de transfert inverse, comprennent des moyens pour mélanger, respectivement des moyens pour démêler les données, qui comprennent tous deux :
- un générateur d'adresses qui fournit des séquences variables d'adresses,
- une mémoire qui est écrite par les données respectivement à mélanger ou à démêler et qui délivre en lecture des données respectivement mélangées ou démêlées, le mélange et/ou le démêlage, étant réalisé en adressant la mémoire différemment en lecture et en écriture à l'aide du générateur d'adresses à séquences variables.

Il peut s'agir de données numériques en provenance d'un signal modulé par une modulation numérique. Celle-ci peut être représentée par une constellation d'états dans une représentation à deux dimensions : composante en phase/composante en quadrature. Le système comprend alors, dans la station émettrice, des moyens pour transformer des messages à émettre en symboles de la modulation numérique, et, dans la station réceptrice, des moyens pour, inversement, extraire les messages des symboles reçus.

Pour chaque symbole Se de la constellation, les moyens pour échantillonner peuvent générer un nombre quelconque de symboles échantillonnés. Ce nombre est un nombre réel. Suivant le nombre d'échantillons pris par symbole, et la fréquence de changement de l'affectation du mélange, on réalise soit la technique rapide à sauts de fréquence (fast frequency hopping) soit la technique lente (slow frequency hopping). Dans le cas de la technique rapide, les moyens pour mélanger comprennent des moyens pour grouper en paquets plusieurs symboles échantillonnés, un paquet contenant un nombre de symboles échantillonnés supérieur ou égal au nombre de symboles de la constellation dont ils sont issus.

Les symboles multiplexés en fréquence peuvent être exploités préférentiellement en les incorporant dans un format de trame tel celui utilisé dans une technique par répartition à multiporteuses de fréquences orthogonales dite technique OFDM (en langue anglaise : Orthogonal Frequency Division Multiplexing).

De ce fait, avantageusement, il n'est plus nécessaire d'utiliser d'égaliseur compliqué à la réception pour égaliser les signaux ayant subi des échos dus à un environnement à multitrajets. En effet, en organisant le signal multiplexé sous forme de trames successives constituées de blocs munis d'intervalles de garde, il est possible d'absorber tous les retards dus à des trajets multiples.

Avec des symboles organisés en trames OFDM, il n'y a plus également de problèmes de synchronisation sur le début de chaque séquence de mélange car tous les mécanismes de synchronisation sont déduits de ceux mis en oeuvre dans la répartition multiplexée de fréquences orthogonales. Le choix et le nombre des séquences de mélange est beaucoup plus étendu.

Pour former une trame OFDM, les moyens de multiplexage comprennent alors en outre :
- des moyens pour ajouter des symboles de protection,
- des moyens de transformation parallèle-série,
- des moyens pour former des trames de blocs de symboles et ajouter des blocs de symboles spéciaux.

Les symboles spéciaux peuvent être des symboles de synchronisation, de service, d'estimation du canal ou autres.

A la réception, les moyens de démultiplexage comprennent alors en série :
- un échantillonneur,
- des moyens d'entrée de transformation série-parallèle, des données modulées reçues,
- des moyens d'application d'une transformée de Fourier directe pour délivrer lesdits symboles estimés reçus.

A la réception pour tenir compte des affaiblissements du signal, on peut adjoindre un ou plusieurs module(s) de contrôle automatique de gain. Ils peuvent être disposés pour agir sur chaque message codé affecté à chaque porteuse en sortie des moyens d'application de la transformée de Fourier directe.

Selon l'invention, l'énergie transmise est beaucoup mieux répartie en fréquence sur le canal ce qui rend ce système plus robuste aux évanouissements sélectifs. La combinaison de la technique à étalement de spectre par sauts de fréquence avec la technique à multiporteuses par répartition multiplexée de fréquences orthogonales apporte ainsi des performances et des avantages nouveaux.

Dans un mode préférentiel de réalisation, le système selon l'invention comprend des stations utilisatrices émettrices/réceptrices qui peuvent être mobiles, et au moins une station de base qui est fixe. Une station de base couvre ce que l'on appelle une cellule, c'est-à-dire qu'elle dispose d'un certain rayon d'action. Au-delà de ce rayon d'action, c'est une autre station de base qui prend le relai lorsque la station mobile a quitté les limites de la cellule. Avantageusement, grâce à l'invention, une cellule peut avoir une taille plus grande, alors qu'auparavant l'accroissement de taille nécessitait une complexité accrue de l'égaliseur.

Chaque station utilisatrice dispose de moyens pour émettre vers la station de base et pour décoder uniquement les messages qui lui sont destinés.

La station de base dispose de moyens pour émettre vers toutes les stations utilisatrices et pour recevoir des messages issus de toutes les stations utilisatrices et de moyens pour gérer la mise en communication des stations utilisatrices entre elles.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent :
Figure 1 : un schéma d'une chaîne de traitement émission/réception opérant dans une station utilisatrice.
Figure 2 : un schéma général d'une partie d'un système de communication selon l'invention.
Figure 3 : un schéma de base de la technique connue d'étalement de spectre par sauts de fréquence.
Figure 4 : un schéma d'un exemple de mise en oeuvre d'étalement de spectre par sauts de fréquence selon l'invention.
Figure 5 : un exemple de schéma des moyens pour mélanger les symboles.
Figure 6 : un schéma d'un multiplexeur OFDM destiné à être utilisé avec une émission sur multiporteuses.
Figure 7 : un schéma d'un démultiplexeur OFDM.
Figure 8 : un schéma d'un démultiplexeur utilisé pour estimer des symboles reçus dans une station utilisatrice avec contrôle automatique de gain.
Figure 9 : un exemple de moyens de décision utilisés à la réception.
Figure 10 : un schéma général d'un système de communication à multiutilisateurs.
Figure 11 : deux courbes de la réponse fréquentielle d'un système classique à étalement de spectre et d'un système selon l'invention.
Figure 12 : un diagramme de répartition des symboles sur une période de temps µTs.

La description qui va suivre concerne le cas général pour lequel la transmission entre la station émettrice et la station réceptrice s'effectue à travers une station de base. Bien évidemment, l'invention concerne aussi le cas pour lequel la transmission s'effectue directement sans la mise en oeuvre d'une station de base.

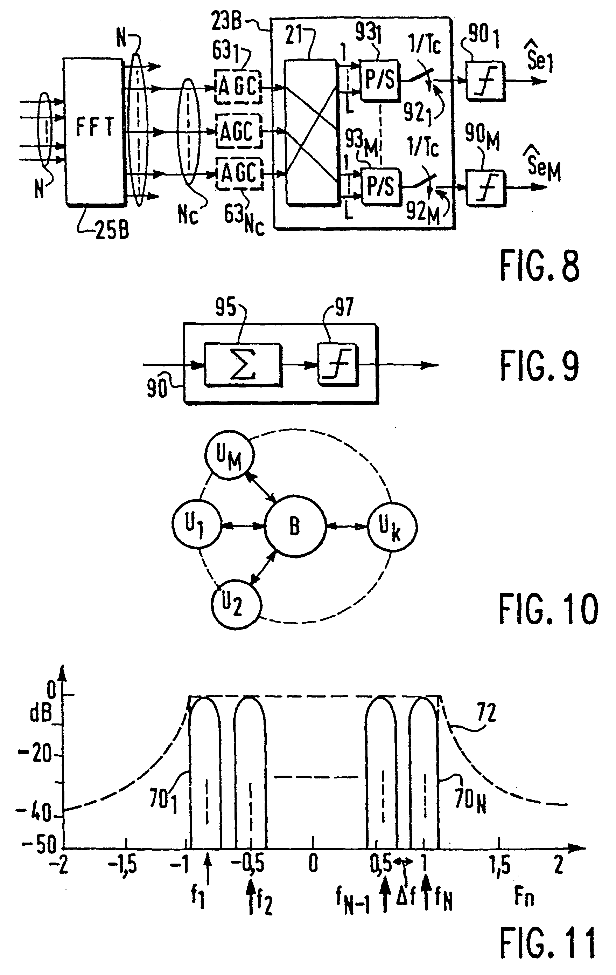

La figure 10 représente symboliquement un système de communication à multiutilisateurs (U₁, U₂... Uₖ... U_{M}) où M est le nombre total d'utilisateurs. Tous les utilisateurs communiquent par des liaisons bidirectionnelles avec une station de base B. Celle-ci sert de relai pour mettre en communication deux stations utilisatrices entre elles. Une station de base dispose d'un rayon d'action. Les stations utilisatrices étant des stations a priori mobiles, une station utilisatrice U₂ (ou plusieurs) peut sortir du rayon d'action d'une station de base B₁. Dans ce cas, une autre station de base B₂ participe à la gestion des communications. Les deux stations de base B₁, B₂ échangent alors des informations de gestion pour mettre en communication une station utilisatrice U₁ (de la zone d'action de B₁) avec une station utilisatrice U₂ (de la zone d'action de B₂).

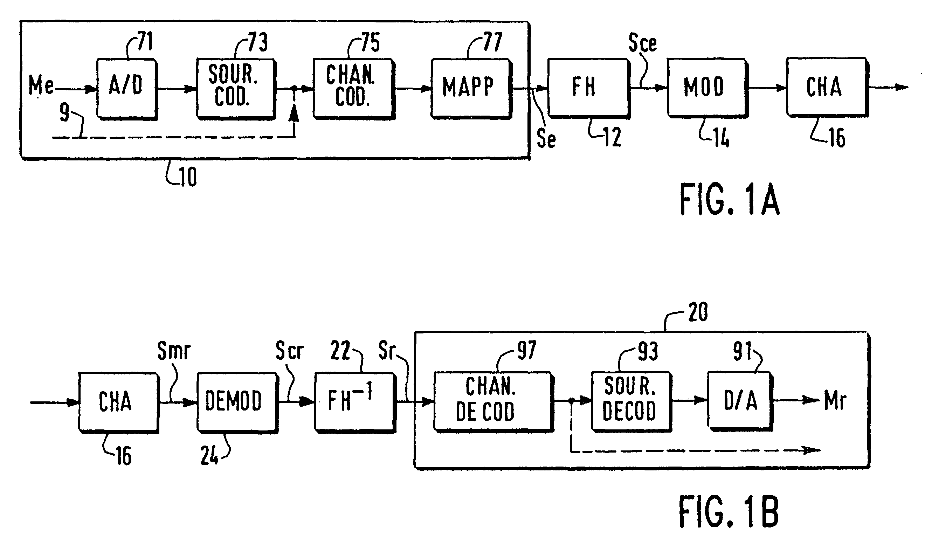

Une chaîne de traitement classique mise en oeuvre dans une station utilisatrice quelconque est représentée sur la figure 1. A l'émission (figure 1A), elle comprend en série :
- des moyens 10 pour coder des messages Me à émettre et pour les transformer en symboles Se d'une constellation,
- des moyens FH 12 de transfert en bande de base desdits symboles Se sur une pluralité de porteuses avec codage par sauts de fréquence pour délivrer des symboles codés Sce à émettre,
- et des moyens de modulation 14 en radiofréquences. L'émission est ensuite effectuée sur un canal CHA 16.

Les moyens 10 pour coder les messages Me comprennent en série :
- des moyens 71 de conversion analogique-numérique A/D, qui peuvent être suivis d'un codeur de source 73 SOUR COD,
- un codeur de canal 75 CHAN COD,
- et un organe 77 d'affection MAPP des données binaires dans une constellation.

Il peut s'agir de constellations MAQ, QPSK, BPSK ou autres. Les codeurs de source 73 et de canal 75 peuvent ne pas exister selon les caractéristiques du canal de communication. De même le convertisseur A/D 71 et le codeur de source 73 peuvent ne pas exister si le message Me est disponible sous une forme numérisée (connexion 9). Par contre, le convertisseur existe, par exemple, dans le cas des messages vocaux pour des communications téléphoniques à partir de stations utilisatrices mobiles.

Une station utilisatrice est également munie de moyens pour recevoir des données en provenance d'autres stations utilisatrices via la station de base. Pour cela, elle comprend également (Figure 1B) :
- des moyens 24 de démodulation en radiofréquences pour extraire les données numériques représentant les symboles codés reçus Scr,
- des moyens 22 de transfert inverse FH⁻¹ pour extraire des symboles reçus Sr, lesdits moyens 22 effectuant des opérations inverses de celles effectuées par les moyens 12,
- des moyens 20 pour décoder des messages reçus Mr à partir des symboles reçus Sr en effectuant des opérations inverses de celles effectuées à l'émission par les moyens 10.

Les moyens 20 comprennent en série des moyens 97 de décodage de canal, CHAN DECOD, des moyens 93 de décodage de source SOUR DECOD et des moyens 91 de conversion numérique-analogique D/A. Ces moyens existent dans la mesure où les codages correspondants ont été préalablement effectués à l'émission.

Les moyens 24 effectuent à la réception des opérations inverses de celles effectuées à l'émission.

L'invention concerne essentiellement les moyens 12 d'étalement de spectre à sauts de fréquence agissant, à l'émission, sur les symboles Se à émettre et les moyens 22 pour extraire des symboles reçus Sr.

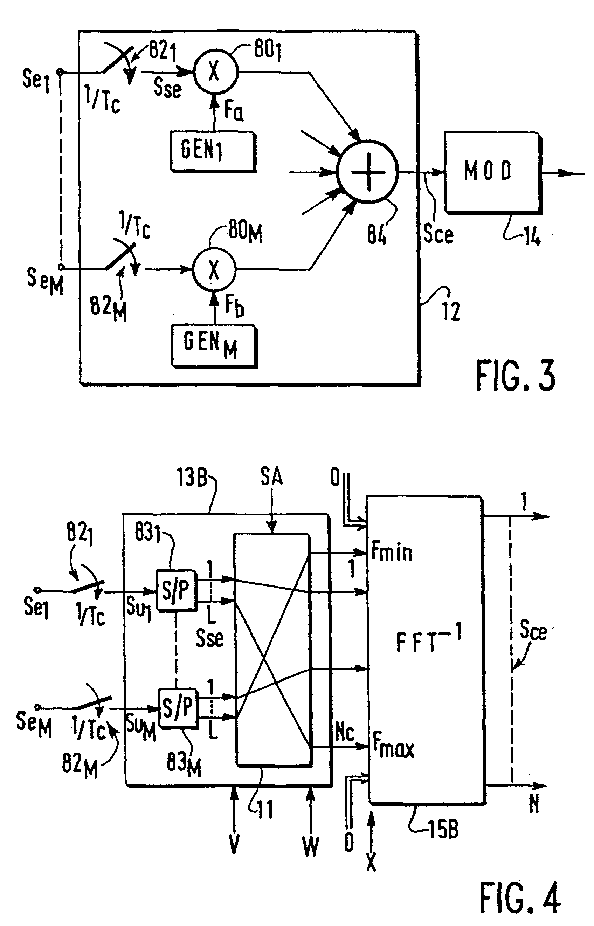

La figure 3 représente un schéma d'un système classique à étalement de spectre consistant à moduler simultanément des porteuses différentes Fa, Fb, par les messages à transmettre tout en imposant des sauts de fréquence dans l'affectation des porteuses auxdits messages. La figure 3 concerne une station de base. Pour une station utilisatrice, le schéma est alors simplifié car il ne dispose que d'une seule voie. Ainsi le message Me1 d'un utilisateur est d'abord codé (figure 1-A) en symboles Se1 qui sont échantillonnés à une cadence 1/Tc par un échantillonneur 82₁ (figure 3). Les échantillons ainsi obtenus sont multipliés dans un multiplieur 80₁ par une porteuse de fréquence Fa issue d'un générateur local GEN1. Les données issues de tous les utilisateurs transitent toutes par la station de base. Comme indiqué sur la figure 3, il y a alors autant de voies dans la station de base qu'il y a d'utilisateurs possibles. La voie affectée au M^{ième} utilisateur comporte un générateur GEN_{M} qui délivre une autre porteuse Fb, avec un autre multiplieur 80_{M} et un autre échantillonneur 82_{M}. Toutes les sorties des multiplieurs sont additionnées entre elles dans un additionneur 84 pour fournir, sur une seule sortie, des symboles Sce à multiporteuses. A chaque voie est affectée une fréquence propre à un instant donné. Pour assurer la qualité de la transmission, les affectations à chaque voie d'une valeur de fréquence sont modifiées de temps à autre en conservant préférentiellement la particularité qu'à chaque instant la même fréquence ne soit pas affectée à deux voies distinctes. Les générateurs sont donc pilotés pour changer rapidement de fréquence de porteuse lorsque l'instant de saut de fréquence se présente.

Les symboles Sce sont ensuite introduits dans le modulateur radiofréquences MOD 14 pour être émis sur le canal.

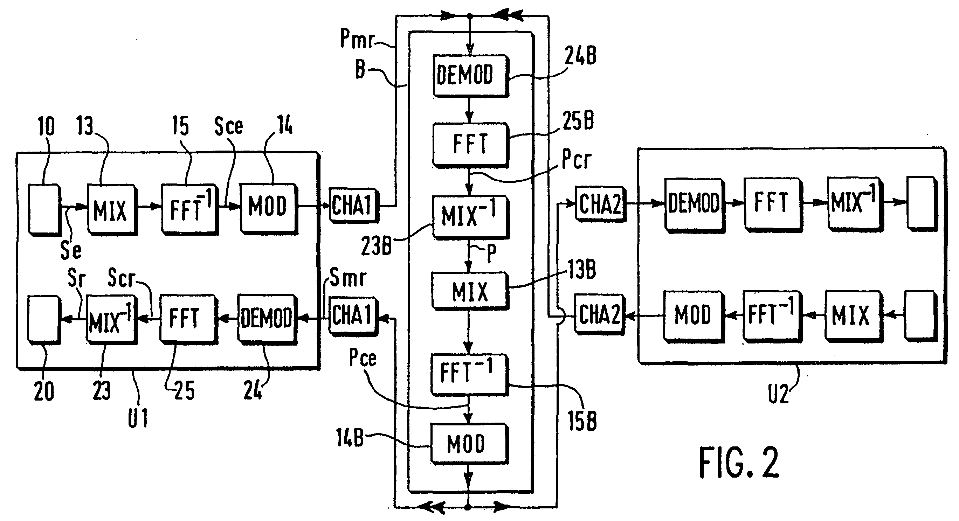

Selon l'invention, le même principe de l'affectation d'une porteuse spécifique à chaque voie ainsi que les sauts de fréquence sont conservés. La mise en oeuvre est néanmoins totalement modifiée. Elle est représentée sur le schéma de la figure 2.

La figure 2 représente un schéma d'un système de communication selon l'invention comprenant une station de base B et des stations utilisatrices par exemple deux stations U₁ et U₂. Les stations utilisatrices ayant les mêmes moyens d'émission/réception, seule la station U₁ sera détaillée par la suite, étant entendu qu'une station émettrice communique avec une autre station opérant alors en station réceptrice.

Selon l'invention, à l'émission, on réalise un codage par étalement de spectre par sauts de fréquence. A la réception, on effectue dans l'ordre inverse des opérations inverses.

La station U₁ comprend les moyens 10 de codage qui délivrent des symboles Se. Ceux-ci sont ensuite codés dans un mélangeur MIX 13 suivi d'un dispositif 15 effectuant une transformée de Fourier inverse FFT⁻¹ et du modulateur MOD 14 radiofréquences, les données numériques étant émises comme cela a été décrit auparavant. Le mélangeur 13 et le dispositif 15 effectuent un traitement des données équivalent à celui effectué par les moyens 12 de la figure 3. Néanmoins, les données traitées sont délivrées en parallèle selon l'invention alors qu'elles sont combinées sur une sortie unique selon la technique connue.

Ces données, qui peuvent être altérées par le canal de transmission CHA1, arrivent à la station de base B selon des données Pmr. Elles sont démodulées dans un démodulateur 24B puis démultiplexées par un dispositif 25B effectuant une transformée de Fourier FFT pour fournir des symboles codés reçus Pcr, puis un démêlage MIX⁻¹ 23B inverse de celui effectué à l'émission fournit des symboles non codés P. Ceux-ci sont à leur tour recodés dans la station de base, par des moyens de mélange MIX 13B puis multiplexés par un dispositif 15B effectuant une transformée de Fourier inverse FFT⁻¹, enfin réémis par un modulateur 14B à radiofréquences. Les symboles émis arrivent, par un canal CHA2 qui peut être différent du précédent, à une autre station utilisatrice U₂ qui agit en station réceptrice. Considérons le cas où la station U₁ opère en station réceptrice d'une autre station émettrice. Elle reçoit des symboles modulés Smr qui sont démodulés par le démodulateur 24 puis démultiplexées par un dispositif 25 qui effectue une transformée de Fourier FFT qui fournit des symboles codés reçus Scr qui sont ensuite démêlés par des moyens de démêlage MIX⁻¹ 23 effectuant un démêlage inverse du mélange MIX effectué à l'émission.

La station de base B reçoit toutes les données en provenance de toutes les stations utilisatrices. Ces données arrivent superposées les unes aux autres dans la même bande de fréquences à l'entrée de la station de base. Celle-ci effectue la gestion des communications. Pour cela lorsqu'une station U₁ doit être mise en communication avec une station U₂, la station de base B recode le message à transmettre soit avec le code de mélange de la station utilisatrice à laquelle ce message est destiné, soit avec le même code de mélange que celui de la station émettrice et la station de base communique à la station réceptrice le code de mélange propre à la station émettrice pour qu'elle puisse décoder les messages qui lui parviennent par le canal.

La figure 4 représente, dans le cas d'une station de base, le bloc de mélange MIX 13B et le bloc 15B FFT⁻¹. Les symboles Se₁ - Se_{M} en provenance des M utilisateurs arrivent sur des moyens d'échantillonnage 82₁ - 82_{M} opérant à la cadence 1/Tc pour fournir des symboles échantillonnés Su₁ - Su_{M}. Les symboles échantillonnés sont groupés en paquets (symboles Sse) dans des moyens de groupement en paquets S/P, 83₁ - 83_{M}. Les moyens S/P 83₁ - 83_{M} existent dans la mesure où l'échantillonnage fournit plus de un échantillon par symbole Se. Ensuite des moyens 11 effectuent un mélange des symboles échantillonnés groupés Sse. En sortie des moyens 11, les symboles échantillonnés ne sont plus disposés dans le même ordre que celui qu'ils avaient en entrée. Cet ordre est fonction d'une commande de mélange SA qui impose, pour chaque symbole échantillonné, une affectation spécifique à une fréquence porteuse d'une modulation à multiporteuses, l'affectation faisant en outre l'objet de sauts de fréquence. Les symboles ainsi mélangés sont ensuite transformés en symboles multiplexés en fréquence d'après une répartition de fréquences orthogonales. Ceci est effectué dans les moyens de multiplexage 15B qui réalisent une transformée de Fourier inverse. Pour réaliser la transformée de Fourier inverse, il faut fournir en entrée en parallèle un nombre de données N = 2^{G} où G est un entier positif. Lorsque le nombre total de porteuses Nc est tel que N_{c} < N, il faut ajouter des données nulles sur les entrées situées de part et d'autre des entrées porteuses d'informations. On dispose en sortie du bloc 15B de données Sce en parallèle, selon une répartition de multiporteuses à fréquences orthogonales.

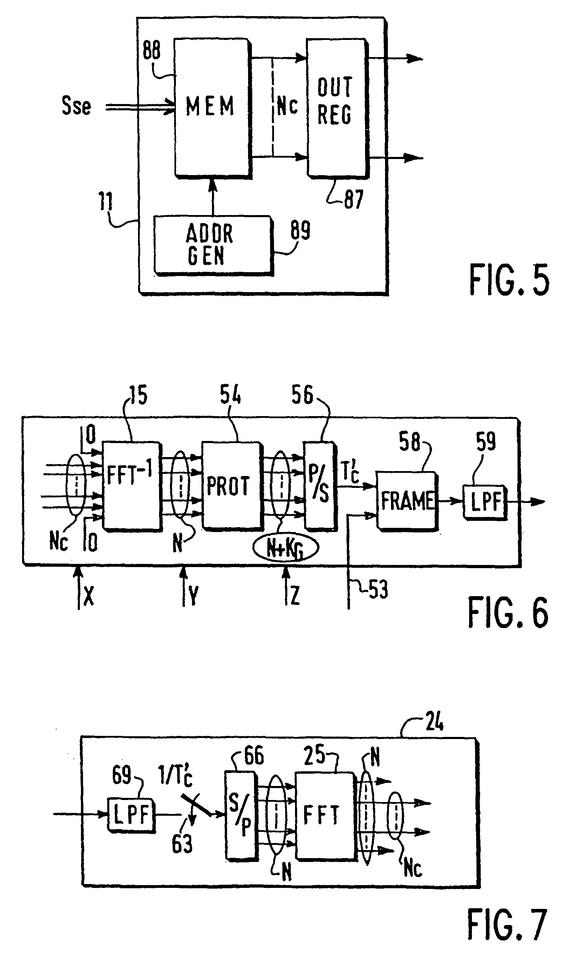

La figure 5 représente un exemple de réalisation des moyens de mélange 11. Les symboles Sse sont par exemple écrits dans une mémoire MEM 88 à des adresses déterminées par un générateur d'adresses ADDR GEN 89. A la lecture de cette mémoire MEM, le générateur d'adresses 89 fournit des adresses de lecture différentes de celles utilisées à l'écriture. On réalise ainsi le mélange des symboles indiqué schématiquement sur la figure 4. Un registre de sortie 87 permet de grouper les symboles pour une sortie commune en parallèle.

Ces symboles peuvent être exploités sous cette forme ou, préférentiellement selon l'invention, on les incorpore à un format d'une modulation à multiporteuses dite OFDM. Ceci nécessite d'ajouter un certain nombre de signaux de service qui permettent d'accroître la fiabilité des transmissions.

Les mécanismes de construction d'une trame OFDM sont représentés sur le schéma de la figure 6.

A un instant donné les N symboles en parallèle issus des moyens 15 forment une partie d'un bloc de données OFDM. Un dispositif de protection PROT 54 ajoute à cette partie de bloc de données, des données correspondant à un intervalle de garde. Ceci consiste à recopier certaines données.

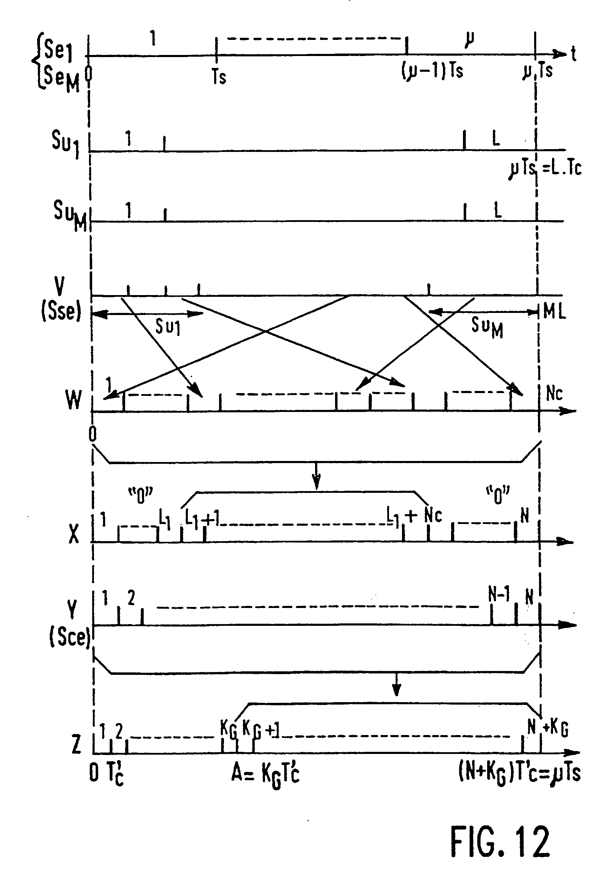

La figure 12 détaille les mécanismes mis en jeu dans la construction d'un bloc de données OFDM. Un symbole Se est en général une valeur complexe. La première ligne représente, par exemple, une suite d'états pour un symbole Se₁ à coder pour l'utilisateur U₁. Un symbole Se₁ a une durée Ts. On considère une suite de plusieurs symboles, par exemple µ symboles, correspondant à une durée µ.Ts. A chaque utilisateur U₁...U_{M} correspond une telle suite Se₁ - Se_{M}.

Après leur passage dans les échantillonneurs 82₁ - 82_{M} (figure 4), ces symboles Se donnent naissance aux symboles échantillonnés Su₁ - Su_{M} qui, après groupement en parallèle, donnent naissance aux symboles groupés Sse (repère V, figure 4). Ainsi µ symboles Se donnent naissance à L symboles en sortie de chaque moyen de groupement S/P, 83₁ - 83_{M} pour chaque durée µ.Ts et pour chaque utilisateur U (avec L ≥ µ). Préférentiellement le rapport L/µ est un entier.

Les données en provenance des M utilisateurs sont regroupées pour former M.L données Sse (signal V). Ensuite, les M.L données sont mélangées suivant le principe décrit sur la figure 5 pour créer Nc données (signal W) avec Nc égal au nombre maximum d'utilisateurs multiplié par L. Néanmoins, Nc peut être plus grand que M.L. Les Nc données forment alors Nc symboles d'un signal OFDM. On a donc Nc symboles qui entrent en parallèle dans le bloc 15 qui effectue une transformée de Fourier inverse d'ordre N, tel que N = 2^{G} > Nc avec G entier. Pour cela, les Nc symboles sont complétés par un nombre L1 = (N-Nc)/2 de données "0" de part et d'autre en entrée du bloc 15 (repère X, figure 6). Si N-Nc est impair, le début ou la fin du bloc reçoit un symbole de plus. Si µ.L est égal à 1, (soit un échantillon par symbole initial Se), un système à sauts de fréquence lent est obtenu en changeant le mixage tous les k blocs (avec k entier supérieur ou égal à 1). Pour permettre aux N symboles de sortir ultérieurement au cours d'une durée µTs, le bloc 15 fonctionne avec une durée plus courte soit µ.Ts/N (repère Y). Les N symboles qui sortent du bloc 15 sont à leur tour complétés par K_{G} symboles correspondant à un intervalle de garde Δ = K_{G}.T'c formant protection. Les K_{G} symboles correspondent à une copie des derniers symboles des N symboles précédents. Ces K_{G} symboles sont ajoutés devant les N symboles pour constituer un bloc de (K_{G} + N) symboles à émettre (repère Z). Là aussi, le bloc de garde 54 opère avec une durée encore diminuée (T'c = µTs/(N + K_{G})) pour permettre une sortie série ultérieure des (K_{G} + N) symboles au cours d'une durée maintenue égale à µTs. Un dispositif 56 de transformation parallèle-série effectue la sérialisation des (K_{G} + N) symboles. Les blocs successifs de (K_{G} + N) symboles OFDM sont ensuite organisés en trame OFDM dans un dispositif 58 FRAME. Celui-ci ajoute des symboles spéciaux 53 (synchronisation, wobulation ou autres) qui servent, entre autres, à synchroniser l'émission et la réception ou à estimer le canal. Un filtre passe-bas 59 LPF filtre les signaux avant leur émission par le modulateur à radiofréquences 14, 14B (figure 2).

A la réception les symboles Smr modulés reçus sont démodulés dans le démodulateur 24 (figure 2) puis entrent dans le dispositif de démultiplexage FFT 25 qui effectue un traitement inverse de celui effectué à l'émission en effectuant une transformée de Fourier. Le dispositif 25 comprend en série (figure 7) :
- un filtre passe-bas 69,
- un échantillonneur 63 à la cadence 1/T'c,
- un dispositif 66 de transformation série-parallèle qui délivre N symboles utiles et qui donc ne tient pas compte des K_{G} symboles reçus pendant l'intervalle de garde,
- un dispositif 25 de calcul d'une transformée de Fourier directe qui délivre une suite de blocs de N symboles.

Les extrémités des blocs de N symboles sont abandonnées pour ne conserver que la partie centrale comprenant Nc symboles Scr. Ceux-ci entrent dans le démêleur MIX⁻¹ 23, 23B (figure 2) pour être démêlés.

La figure 11 représente la densité spectrale de puissance du signal émis en fonction de la fréquence. Les courbes 70₁ - 70_{N} correspondent à un système classique à étalement de spectre caractérisé par un spectre formé de bandes étroites centrées chacune sur des fréquences f₁, f₂... f_{N} séparées entre elles par une bande de garde Δf. La courbe 72 correspond à un système selon l'invention qui combine les techniques à étalement de spectre à sauts de fréquence avec les techniques par répartition multiplexée de fréquences orthogonales émises sur multiporteuses. L'échelle horizontale correspond à une fréquence Fₙ en bande de base normalisée par rapport à la bande utile du signal. L'échelle verticale correspond à la densité spectrale de puissance exprimée en décibels. On observe que pour un système classique, le spectre 70 présente plusieurs bandes étroites disjointes pour permettre une séparation des oscillateurs et donc une perte. Par contre, pour le système à multiporteuses selon l'invention, le spectre 72 est rectangulaire ce qui montre que l'énergie transmise pour toutes les porteuses reste constante dans la bande utile du signal. On a donc une meilleure utilisation du canal de transmission ce qui rend les transmissions plus fiables et allège la complexité des circuits de réception.

Le schéma du multiplexeur OFDM représenté sur la figure 6, qui est une version plus élaborée du multiplexeur FFT⁻¹ 15 de la figure 2, est utilisé préférentiellement aussi bien dans une station utilisatrice que dans une station de base.

Les canaux de transmission peuvent être sujets à des évanouissements qui altèrent les signaux reçus. Ces évanouissements peuvent se présenter dans le domaine fréquentiel et/ou temporel. Il est donc souhaitable d'effectuer, à la réception, un contrôle automatique de gain. Ce dernier peut néanmoins ne pas être indispensable. Il figure donc en pointillé sur la figure 8.

La figure 8 représente un schéma de la partie réceptrice d'une station utilisatrice avec contrôle automatique de gain AGC. Les Nc signaux affectés à chaque porteuse sont préférentiellement munis d'un dispositif AGC 63₁ - 63_{Nc}.

Après le démêlage, par les moyens de démêlage 21, les M.L données sortent en groupe de M paquets de L données. Chaque paquet se rapporte à un utilisateur U₁,...U_{M}. Un paquet de L données en parallèle est transformé par des moyens de transformation parallèle-série P/S 93₁ - 93_{M} en L données série qui sont échantillonnées à la cadence 1/Tc par des moyens d'échantillonnage 92₁ - 92_{M}. Les moyens 93₁ - 93_{M} pour séparer les échantillons d'un paquet, existent dans la mesure où l'opération inverse a été effectuée à l'émission. Enfin des moyens de décision 90₁ - 90_{M} permettent d'estimer les µ symboles d'émission *Ŝe*₁, *Ŝe*_{*M*} pour chaque utilisateur.

Un moyen de décision 90₁ - 90_{M} peut être constitué, par exemple, d'un dispositif moyenneur Σ 95 en série avec un organe de décision à seuil 97 (figure 9).

La combinaison du codage par étalement de spectre à sauts de fréquence avec une modulation à multiporteuses par répartition multiplexée de fréquences orthogonales présente de multiples avantages.

Il n'est plus nécessaire à la réception d'effectuer une synchronisation sur le début de chaque séquence de mélange comme la technique connue le requiert lorsqu'elle est utilisée isolément.

Grâce à l'utilisation d'une modulation à multiporteuses, on dispose d'une plus grande liberté sur le choix des séquences pseudo-aléatoires.

Préférentiellement, on utilise des signaux OFDM organisés en trames. Du fait que chaque station utilisatrice dispose d'une trame qui lui est propre, les mécanismes de synchronisation à la réception sont simplifiés. De plus, l'utilisation d'un intervalle de garde par bloc de données permet d'absorber toutes les incertitudes qui pourraient apparaître aussi bien du fait des retards de propagation variables selon les distances émetteur/récepteur que du fait de retards dus à des trajets multiples. En particulier les retards de propagation sont liés au rayon d'action de la station de base. On constate que l'existence de l'intervalle de garde permet d'accroître ce rayon d'action par rapport aux techniques classiques à étalement de spectre et ceci sans accroître la complexité du matériel mis en oeuvre. Dans le cas de la technique classique, il faudrait nécessairement disposer d'un égaliseur complexe pour surmonter ces difficultés.

De plus, selon l'invention, l'énergie est répartie plus uniformément sur le canal ce qui rend le système plus robuste aux évanouissements.

## Revendications

1. Emetteur comportant :
- des moyens de codage à étalement de spectre (10) pour coder des messages à émettre (Me) en symboles (Se) d'une modulation multi-porteuses à fréquences orthogonales,
- un mélangeur (13) pour mélanger les symboles (Se) en affectant à chaque symbole au moins une fréquence particulière de la modulation multi-porteuse, l'affectation étant modifiée périodiquement selon un code à saut de fréquences prédéfini,
- des moyens de multiplexage (15) pour répartir les symboles (Se) sur leurs fréquences spécifiques orthogonales à l'aide d'une transformée de Fourrier inverse, en vue délivrer des symboles codés à émettre (Sce) multiplexés selon une modulation multi-porteuses à fréquences orthogonales.

2. Emetteur selon la revendication 1, dans lequel le mélangeur (13B) comprend :
- des moyens d'échantillonnage (82₁, ..., 82_{M}) pour échantillonner les symboles (Se) de la modulation,
- des moyens de groupement (83₁, ..., 83_{M}) pour grouper en paquets plusieurs symboles échantillonnés (Su₁, ..., Su_{M}), un paquet contenant un nombre de symboles échantillonnés supérieur ou égal au nombre de symboles (Se₁ - Se_{M}) de la modulation numérique dont ils sont issus,
- des moyens de mixage (11) pour mélanger les symboles échantillonnés groupés et ainsi modifier l'ordre des symboles échantillonnés selon une commande de mélange (SA) qui impose, pour chaque symbole échantillonné, l'affectation par sauts de fréquences à une fréquence porteuse de la modulation multi-porteuses.

3. Emetteur selon la revendication 1, comportant des moyens de formation de trames de signaux couplés aux moyens de multiplexage (15) pour assembler les symboles codés multiplexés (Sce) selon une suite de trames de signaux.

4. Récepteur comportant :
- des moyens de démultiplexage (25) pour recevoir des symboles codés multiplexés démodulés et pour leur appliquer une transformation de Fourrier directe de façon à démultiplexer des symboles reçus (Scr) démodulés selon une modulation multi-porteuses à fréquences orthogonales,
- des moyens de démêlage (23) pour combiner les symboles reçus démultiplexés (Scr) selon un code à saut de fréquence prédéfini,
- des moyens de décodage (20) pour décoder les symboles (Scr) reçus, codés sur une pluralité de fréquences porteuses orthogonales à l'aide d'un codage à étalement de spectre par sauts de fréquences, et pour en extraire des symboles reçus (Sr) représentant des points d'une modulation multi-porteuses.

5. Système de communication à accès multiple par étalement de spectre à multi-porteuses par sauts de fréquences comprenant au moins un émetteur et au moins un récepteur communiquant entre eux via des canaux de transmission (CHA), l'émetteur étant selon la revendication 1 et le récepteur étant selon la revendication 4.

6. Station de base mise en oeuvre dans un système selon la revendication 5, comportant un émetteur selon la revendication 1.

7. Station de base mise en oeuvre dans un système selon la revendication 5, comportant un récepteur selon la revendication 4.

8. Procédé d'émission comportant :
- Une étape de codage à étalement de spectre (10) pour coder des messages à émettre (Me) en symboles (Se) d'une modulation multi-porteuses à fréquences orthogonales,
- Une étape de mélange (13) pour mélanger les symboles (Se) en affectant à chaque symbole au moins une fréquence particulière de la modulation multi-porteuse, l'affectation étant modifiée périodiquement selon un code à saut de fréquences prédéfini,
- Une étape de multiplexage (15) pour répartir les symboles (Se) sur leurs fréquences spécifiques orthogonales à l'aide d'une transformée de Fourrier inverse, en vue délivrer des symboles codés à émettre (Sce) multiplexés selon une modulation multi-porteuses à fréquences orthogonales.

9. Procédé de réception comportant :
- Une étape de démultiplexage (25) pour recevoir des symboles codés multiplexés démodulés et pour leur appliquer une transformation de Fourrier directe de façon à démultiplexer des symboles reçus (Scr) démodulés selon une modulation multi-porteuses à fréquences orthogonales,
- Une étape de démêlage (23) pour combiner les symboles reçus démultiplexés (Scr) selon un code à saut de fréquence prédéfini,
- Une étape de décodage (20) pour décoder les symboles (Scr) reçus, codés sur une pluralité de fréquences porteuses orthogonales à l'aide d'un codage à étalement de spectre par sauts de fréquences, et pour en extraire des symboles reçus (Sr) représentant des points d'une modulation multi-porteuses.

## Patentansprüche

1. Sender mit:
- Mitteln zum Kodieren in Spektrumsspreizung (10) für die Kodierung der zu sendenden Meldungen (Me) in Symbolen (Se) einer Modulation mit Mehrträgern in orthogonalen Frequenzen,
- einem Mischer (13) für die Mischung der Symbole (Se) mit der Zuteilung an jedes Symbol von mindestens einer speziellen Frequenz der Modulation mit Mehrträgem, wobei die Zuteilung entsprechend einem Kode mit vordefiniertem Frequenzsprung periodisch geändert wird,
- Mitteln zum Multiplexing (15) für die Verteilung der Symbole (Se) auf ihren spezifischen orthogonalen Frequenzen mit Hilfe einer umgekehrten Fourriertransformierten hinsichtlich der Ausgabe von kodierten zu sendenden Symbolen (Sce), multiplexiert entsprechend einer Modulation mit Mehrträgern in orthogonalen Frequenzen.

2. Sender nach Anspruch 1, in dem der Mischer (13B) enthält:
- Mittel zum Abtasten (82₁, ..., 82_{M}) für die Abtastung der Symbole (Se) der Modulation,
- Mittel zum Gruppieren (83₁, ..., 83_{M}) für die Gruppierung in Paketen mehrerer abgetasteter Symbole (Su₁, ..., Su_{M}), wobei ein Pakete eine Anzahl abgetasteter Symbole enthält, die größer oder gleich zu der Anzahl Symbole (Se₁ - Se_{M}) der digitalen Modulation ist, woraus sie hervorgingen,
- Mittel zum Mischen (11) für die Mischung der abgetasteten gruppierten Symbole, um so die Reihenfolge der abgetasteten Symbole gemäß einer Mischungssteuerung (SA), die für jedes abgetastete Symbol die Zuteilung durch Frequenzsprünge an eine Trägerfrequenz der Modulation mit Mehrträgem vorgibt.

3. Sender nach Anspruch 1 mit Mitteln zur Bildung von Signalrastern gekoppelt an die Mittel zum Multiplexing (15) für die Verbindung multiplexierter kodierter Symbole (Sce) gemäß einer Folge von Signalrastern.

4. Empfänger mit:
- Mitteln zum Demultiplexing (25) für den Empfang demodulierter multiplexierter kodierter Symbole, und um eine direkte Fourriertransformierte auf sie anzuwenden, um die erhaltenen demodulierten Symbole (Scr) gemäß einer Modulation mit Mehrträgern in orthogonalen Frequenzen zu demultiplexen,
- Mitteln zum Entmischen (23) zur Kombination der erhaltenen demultiplexierten Symbole (Scr) gemäß einem Kode mit vordefiniertem Frequenzsprung,
- Dekodierungsmitteln (20) zum Dekodieren der erhaltenen Symbole (Scr), kodiert über eine Vielzahl von orthogonalen Trägerfrequenzen mit Hilfe einer Kodierung mit Frequenzsprung-Spektrumsspreizung und für die Entnahme der erhaltenen Symbole (Sr), die Punkte einer Modulation mit Mehrträgem darstellen.

5. Mehrträger-Frequenzsprung-Kommunikationssystem mit Spektrumsspreizung im Mehrfachzugriff mit mindestens einem Sender und mindestens einem Empfänger, die miteinander über Übertragungskanäle (CHA) kommunizieren, wobei der Sender Anspruch 1 und der Empfänger Anspruch 4 entspricht.

6. Basisstation in einem System nach Anspruch 5, die einen Sender nach Anspruch 1 enthält.

7. Basisstation in einem System nach Anspruch 5, die einen Empfänger nach Anspruch 4 enthält.

8. Sendeverfahren mit:
- Einem Kodierungschritt mit Spektrumsspreizung (10) zum Kodieren der zu sendenden Meldungen (Me) in Symbolen (Se) einer Modulation mit Mehrträgern in orthogonalen Frequenzen,
- einem Mischschritt (13) zum Mischen der Symbole (Se) mit der Zuteilung an jedes Symbol von mindestens einer speziellen Frequenz der Modulation mit Mehrträgern, wobei die Zuteilung entsprechend einem Kode mit vordefiniertem Frequenzsprung periodisch geändert wird,
- einem Schritt des Multiplexing (15) zum Verteilen der Symbole (Se) auf ihren spezifischen orthogonalen Frequenzen mit Hilfe einer umgekehrten Fourriertransformierten hinsichtlich der Ausgabe von kodierten zu sendenden Symbolen (Sce), multiplexiert entsprechend einer Modulation mit Mehrträgern mit orthogonalen Frequenzen.

9. Empfangsverfahren mit:
- Einem Schritt des Demultiplexing (25) für den Empfang demodulierter multiplexierter kodierter Symbole, und um eine direkte Fourriertransformierte auf sie anzuwenden, um die erhaltenen demodulierten Symbole (Scr) gemäß einer Modulation mit Mehrträgem in orthogonalen Frequenzen zu demultiplexen,
- einem Schritt zum Entmischen (23) zur Kombination der erhaltenen demultiplexierten Symbole (Scr) gemäß einem Kode mit vordefiniertem Frequenzsprung,
- einem Dekodierungsschritt (20) zum Dekodieren der erhaltenen Symbole (Scr), kodiert über eine Vielzahl von orthogonalen Trägerfrequenzen mit Hilfe einer Kodierung mit Frequenzsprung-Spektrumsspreizung und für die Entnahme der erhaltenen Symbole (Sr), die Punkte einer Modulation mit Mehrträgem darstellen.

## Claims

1. A transmitter comprising:
- spread-spectrum coding means (10) for coding transmit messages (ME) into symbols (Se) of an orthogonal frequency division multicarrier modulation,
- a mixer (13) for mixing the symbols (Se) by assigning to each symbol at least one particular frequency of the multicarrier modulation, the assigning being modified periodically in accordance with a predefined frequency jump code,
- multiplexing means (15) for distributing the symbols (Se) over their specific orthogonal frequencies by means of an inverse Fourier transform, so as to deliver coded transmit symbols (Sce) multiplexed according to an orthogonal frequency multicarrier modulation.

2. A transmitter as claimed in claim 1, in which the mixer (13B) comprises:
- sampling means (82₁, ..., 82_{M}) for sampling the symbols (Se) of the modulation,
- packetizing means (831, ..., 83M) for packetizing various sampled symbols (Su₁, ..., Su_{M}), one packet containing a number of sampled symbols greater than or equal to the number of symbols (Se₁ - Se_{M}) of the digital modulation they originate from,
- mixing means (11) for mixing the packetized sampled symbols and then modifying the order of the sampled symbols in accordance with a mixing instruction (SA), which imposes for each sampled symbol the assignment by frequency jumps to a carrier frequency of the multicarrier modulation.

3. A transmitter as claimed in claim 1, comprising signal frame forming means coupled to the multiplexing means (15) for assembling the multiplexed code symbols (Sce) in accordance with a sequence of signal frames.

4. A receiver comprising:
- demultiplexing means (25) for receiving demodulated demultiplexed coded signals and for having them undergo a direct Fourier transform so as to demultiplex received demodulated symbols (Scr) in accordance with a multicarrier orthogonal frequency division modulation,
- demixing means (23) for combining the demultiplexed received signals (Scr) in accordance with a predefined frequency jump code,
- decoding means (20) for decoding the received symbols (Scr), coded in a plurality of orthogonal carrier frequencies by means of a frequency-jump spread spectrum coding and for extracting therefrom received symbols (Sr) representing points of a multicarrier modulation.

5. A multiple access communication system for multiple access via spread spectrum multicarriers by frequency jumps comprising at least one transmitter and one receiver communicating between themselves via transmission channels (CHA), the transmitter being as claimed in claim 1 and the receiver being as claimed in claim 4.

6. A base station used in a system as claimed in claim 5, comprising a transmitter as claimed in claim 1.

7. A base station used in a system as claimed in claim 5, comprising a receiver as claimed in claim 4.

8. A transmitting method comprising:
- spread-spectrum coding means (10) for coding transmit messages (ME) into symbols (Se) of an orthogonal frequency division multicarrier modulation,
- a mixer (13) for mixing the symbols (Se) by assigning to each symbol at least one particular frequency of the multicarrier modulation, the assigning being modified periodically in accordance with a predefined frequency jump code,
- multiplexing means (15) for distributing the symbols (Se) over their specific orthogonal frequencies by means of an inverse Fourier transform, so as to deliver coded transmit symbols (Sce) multiplexed according to an orthogonal frequency multicarrier modulation.

9. A receiving method comprising:
- demultiplexing means (25) for receiving demodulated demultiplexed coded signals and for having them undergo a direct Fourier transform so as to demultiplex received demodulated symbols (Scr) in accordance with a multicarrier orthogonal frequency division modulation,
- demixing means (23) for combining the demultiplexed received signals (Scr) in accordance with a predefined frequency jump code,
- decoding means (20) for decoding the received symbols (Scr), coded in a plurality of orthogonal carrier frequencies by means of a frequency-jump spread spectrum coding and for extracting therefrom received symbols (Sr) representing points of a multicarrier modulation.
